# EUROPÄISCHE PATENTSCHRIFT

(11) **EP 3 772 075 B1**
(45) Veröffentlichungstag und Bekanntmachung des Hinweises auf die Patenterteilung: **14.04.2021**
(21) Anmeldenummer: 19189399.9
(22) Anmeldetag: 31.07.2019
(51) Int. Cl.: H01H 9/02, H01H 1/58, H01H 23/24, H01R 24/76

(54) **TASTAUFSATZ FÜR EINEN BUSANKOPPLER, EIN ENTSPRECHENDES BEDIENGERÄT UND EIN ENTSPRECHENDES VERFAHREN**
TOUCH TOP FOR A BUS COUPLER, CORRESPONDING OPERATING DEVICE AND CORRESPONDING METHOD
ADAPTATEUR DE TOUCHE POUR UN COUPLEUR DE BUS, APPAREIL DE COMMANDE CORRESPONDANT ET PROCÉDÉ CORRESPONDANT

(43) Veröffentlichungstag der Anmeldung: 03.02.2021
(73) Patentinhaber: GIRA GIERSIEPEN GmbH & Co. KG, 42477 Radevormwald (DE)
(72) Erfinder: Kobold, Andreas, 50670 Köln (DE); Klee, Jan, 50825 Köln (DE)
(74) Vertreter: Angerhausen, Christoph

(56) Entgegenhaltungen:
- WO-A1-00/37978
- WO-A1-2007/007429
- WO-A1-2016/191611
- WO-A1-2018/074969
- DE-U1- 29 504 491
- DE-U1-202004 021 357

## Beschreibung

Die Erfindung geht aus von einem Tastaufsatz für einen Busankoppler an eine Busleitung eines Gebäudeautomationssystems gemäß dem Oberbegriff des Anspruchs 1. Ein derartiger Tastaufsatz ist in der WO 2007/007429 A1 beschrieben.

Ein Tastaufsatz, der eine Signalschnittstelle zur Verbindung mit einem Busankoppler und mindestens einen Taster aufweist, der dazu eingerichtet ist, infolge seiner Betätigung ein Signal eines Telegrammtyps für die drahtgebundene Signalübertragung zu erzeugen, ist aus der DE 10 2010 024 245 B4 und aus der DE 10 2006 024 994 B3 bekannt.

Es ist verbreitet, Bussystem für die Gebäudeautomatisierung nach dem KNX-Standard mittels Twisted-Pair-Verdrahtung (TP) zu installieren. Zunehmend sollen in solchen Systemen KNX-Funkprodukte (KNX RF) installiert und gegebenenfalls auch in bestehenden drahtgebundenen Systemen nachgerüstet werden. Die nachzurüstenden KNX-Funkprodukte können beispielsweise KNX-RF-Wandsender sein, die batteriebetrieben sind. Die KNX-Funkprodukte können beispielsweise dazu vorgesehen sein, um diverse verdrahtete KNX-Produkte anzusteuern, beispielsweise KNX-TP-Schaltaktoren, die beispielsweise als Unterputz(UP)-Gerät oder als Reiheneinbaugerät (REG) realisiert sind. Es sind sowohl batteriebetriebene als auch drahtgebunden stromversorgte KNX-RF-Produkte bekannt, wobei insbesondere weniger Energie verbrauchende RF-Produkte, wie Taster und dergleichen, häufig batteriebetrieben ausgebildet sind.

Damit die KNX-RF-Produkte mit den KNX-TP-Produkten kommunizieren können, um zum Beispiel einen Aktor für die Lichtsteuerung zum Einnehmen eines gewünschten Schaltzustands anzusteuern, ist es erforderlich, einen sogenannten RF-TP-Medienkoppler in das Netzwerk des Gebäudeautomationssystems zu integrieren, welcher dazu eingerichtet ist, KNX-RF-Telegramme in KNX-TP-Telegramme zu übertragen, damit diese drahtgebunden an die TP-Aktorik übermittelt werden können. Demgemäß ist es erforderlich, dass insbesondere im Nachrüstfall, wenn in einem bestehenden TP-System nachträglich RF-Produkte genutzt werden sollen, dass ein RF/TP-Medienkoppler beschafft, installiert und in Betrieb genommen wird, was mitunter kosten- und zeitintensiv sein kann. Es ist daher die Aufgabe der Erfindung, eine Lösung für die zum einen preiswerte und zum anderen mit wenig Installationsaufwand verbundene Nachrüstung von RF-Geräten in bestehende TP-Installationen bereitzustellen.

Diese Aufgabe wird durch einen Tastaufsatz mit den Merkmalen des Anspruchs 1 gelöst. Der nebengeordnete Anspruch 11 betrifft ein entsprechendes Verfahren für die Kommunikation in einem Netzwerk eines Gebäudeautomationssystems und der nebengeordnete Anspruch 14 ein entsprechendes Bediengerät. Die abhängigen Ansprüche beschreiben jeweils vorteilhafte Ausführungsformen der Erfindung.

Demgemäß ist bei dem erfindungsgemäßen Tastaufsatz vorgesehen, dass die Funkschnittstelle für die Übertragung des Signals des Telegrammtyps für die drahtlose Signalübertragung mindestens zwei sich in ihrem Frequenzbereich und/oder in ihrer Datenrate unterscheidende Funkkanäle aufweist.

Die Idee der Erfindung liegt somit darin, sämtliche für die Übertragung zwischen den Telegrammen für die drahtlose Signalübertragung einerseits und die drahtgebundene Signalübertragung andererseits erforderliche Technik, insbesondere einen Medienkoppler mit einer Funkschnittstelle, in dem Tastaufsatz selbst vorzusehen. Die Erfindung macht sich somit die Logik bestehender Gebäudeautomationssysteme insofern zunutze, als dass üblicherweise standardisierte Busankoppler vorgesehen sind, die beispielsweise in Form von Unterputz(UP)-Einbaugeräten mit standardisierter Schnittstelle für die Kommunikation mit beliebigen Aufsätzen, die auf dem UP-Busankoppler installiert werden können, versehen sind. So ist es erfindungsgemäß für die Bereitstellung der Funktion des RF/TP-Medienkopplers lediglich erforderlich, dass beispielsweise ein existierender Tastaufsatz gemäß dem Stand der Technik, etwa ein Schalter- oder Tastsensoraufsatz durch einen Tastaufsatz der erfindungsgemäßen Art ersetzt wird.

Es kann weiterhin vorgesehen sein, dass nach der Erstinstallation der Tastaufsatz über seine Funkschnittstelle oder über die Schnittstelle zu dem Busankoppler eine Parametrisierung abfragt, wodurch eine vollautomatische Selbstinbetriebnahme ermöglicht wird. Der Installationsaufwand ist minimiert.

Es kann beispielsweise ein KNX-RF-Tastaufsatz vorgesehen sein, welcher auf einen KNX-TP-UP-Busankoppler installiert ist und es ermöglicht, KNX-RF-Telegramme in KNX-TP-Telegramme zu übertragen und über die Schnittstelle des Medienkopplers mit dem Busankoppler in das TP-Netzwerk zu übertragen. Hierdurch kann der KNX-RF-Tastaufsatz nicht nur KNX-Telegramme beispielsweise über einen KNX-TP-UP-Busankoppler versenden, sondern darüber hinaus auch eingehende KNX-RF-Telegramme in KNX-TP-Telegramme übertragen, wodurch die Nachrüstung eines separaten KNX-RF-TP-Medienkopplers überflüssig wird, der bei den Systemen nach dem Stand der Technik üblicherweise als ein UP-Gerät ausgebildet ist und dementsprechend auch bauwerkseitig entsprechende Vorbereitungsmaßnahmen wie Stemmarbeiten und das Einmauern einer zusätzlichen UP-Dose erfordert hat.

Der Tastaufsatz und der Taster sind auf keine bestimmten Ausführungsformen beschränkt. Der Taster kann beispielsweise ein mechanischer Taster, beispielsweise eine Tastwippe, sein oder aufweisen. Alternativ oder zusätzlich kann der Taster auch einen kapazitiven und/oder induktiven Tastsensor aufweisen oder als ein solcher ausgebildet sein.

Der Medienkoppler kann dazu eingerichtet sein, ein Signal des Telegrammtyps für die drahtlose Signalübertragung über die Funkschnittstelle zu empfangen und in ein Signal eines Telegrammtyps für die drahtgebundene Signalübertagung umzuwandeln und an die Signalschnittstelle zur Verbindung mit dem Busankoppler weiterzuleiten.

Die Signalschnittstelle, über welche das infolge der Betätigung des Tasters erzeugte Signal des Telegrammtyps für die drahtgebundene Signalübertragung an den Busankoppler übertragen wird, kann dieselbe Signalstelle wie die weitere Signalstelle sein, über welche das aus dem Signal des Telegrammtyps für die drahtglose Signalübertragung mit Hilfe des Medienkopplers gewandelte Signal des Telegrammtyps für die drahtgebundene Signalübertragung an den Busankoppler übertragen wird.

Der erfindungsgemäße Tastaufsatz ist grundsätzlich nicht auf die Verwendung in Verbindung mit einem bestimmten Kommunikationsstandard der Gebäudeautomation beschränkt. Beispielsweise kann der Tastaufsatz in einem Gebäudeautomationssystem nach dem KNX-Standard verwendet werden. Dabei kann dann vorgesehen sein, dass der erste Telegrammtyp ein KNX-TP-Telegramm und/oder der zweite Telegrammtyp ein KNX-RF-Telegramm ist.

Der Medienkoppler kann dazu eingerichtet sein, ein Signal des Telegrammtyps für die drahtlose Signalübertragung an die Signalschnittstelle weiterzuleiten. Alternativ oder zusätzlich kann der Taster dazu eingerichtet sein, das Signal des Telegrammtyps für die drahtlose Signalübertragung an die Signalschnittstelle weiterzuleiten. Es kann insbesondere vorgesehen sein, dass das Signal für die drahtlose Signalübertragung nicht nur unmittelbar über die Funkschnittstelle ausgesendet wird, sondern darüber hinaus in das TP-Netzwerk eingekoppelt wird, um beispielsweise an ein weiteres RF-Gerät in dem Gebäudeautomationssystem übertragen zu werden und dort über eine weitere Funkschnittstelle ausgesandt zu werden.

Der Taster kann dazu eingerichtet sein, das infolge seiner Betätigung erzeugte erste Signal des Telegrammtyps für die drahtgebundene Signalübertragung an den Medienkoppler weiterzuleiten. Dabei kann der Medienkoppler dazu eingerichtet sein, das von dem Taster empfangene und in das Signal des Telegrammtyps für die drahtlose Signalübertragung umgewandelte Signal über die Funkschnittstelle auszusenden.

Der Medienkoppler kann dazu eingerichtet sein, ein über die Funkschnittstelle empfangenes Signal, insbesondere ein Signal des Telegrammtyps für die drahtlose Signalübertragung, zu verstärken und als verstärktes Signal über die Funkschnittstelle auszusenden.

Dabei kann ein erster der Funkkanäle (Fast Channel) eine Datenrate aufweisen, die mindestens zweimal und vorzugsweise mindestens zehnmal so hoch wie die Datenrate eines zweiten der Funkkanäle (Slow Channel) ist.

Die Funkschnittstelle kann dazu eingerichtet sein, abhängig von einer erforderlichen Datenrate den ersten oder den zweiten Funkkanal auszuwählen, wobei die erforderliche Datenrate in einem Telegramm des Signals des Telegrammtyps für die drahtlose Signalübertragung hinterlegt ist.

Gemäß einem anderen Aspekt der Erfindung betrifft diese ein Verfahren für die Kommunikation in einem Netzwerk eines Gebäudeautomationssystems, das sowohl drahtgebundene als auch drahtlos eingebundene Netzwerkteilnehmer sowie mindestens einen Tastaufsatz der zuvor beschriebenen Art aufweist, der über einen Busankoppler an eine Busleitung des Gebäudeautomationssystems angebunden ist. Das Verfahren weist dabei mindestens einen der beiden Schrittabfolgen a. und b. auf:
a. Empfangen eines Signals eines Telegrammtyps für die drahtlose Signalübertragung über die Funkschnittstelle des Medienkopplers und Umwandeln des Signals durch den Medienkoppler in ein Signal eines Telegrammtyps für die drahtgebundene Signalübertragung, das über die Signalschnittstelle an den Busankoppler übertragen wird;
b. Betätigen des Tasters des Tastaufsatzes und Erzeugen eines Signals eines Telegrammtyps für die drahtlose Signalübertragung, das über die Funkschnittstelle ausgesendet wird.

In der Schrittfolge b. kann das Erzeugen des Signals eines Telegrammtyps für die drahtlose Signalübertragung das Umwandeln eines von dem Taster empfangenen Signals des Telegrammtyps für die drahtgebundene Signalübertragung in das Signal eines Telegrammtyps für die drahtlose Signalübertragung aufweisen.

Das Verfahren kann in der Schrittfolge b. das Weiterleiten des Signals eines Telegrammtyps für die drahtgebundene Signalübertragung an den Medienkoppler aufweisen, der das Signal in das Signal eines Telegrammtyps für die drahtlose Signalübertragung umwandelt und über die Funkschnittstelle aussendet.

In der Schrittabfolge a. weist das Empfangen eines Signals und/oder in der Schrittabfolge b. weist das Aussenden über die Funkschnittstelle die folgende Schrittabfolge auf: Ermitteln einer erforderlichen Datenrate und Auswählen eines in Bezug auf die erforderliche Datenrate passenden Funkkanals aus einer Mehrzahl Funkkanäle der Funkschnittstelle, die sich zumindest hinsichtlich ihrer Datenrate unterscheiden.

Ebenso wird ein Bediengerät für ein Gebäudeautomationssystem beschrieben, wobei das Bediengerät einen Tastaufsatz der zuvor beschriebenen Art sowie einen Busankoppler aufweist, wobei der Tastaufsatz von dem Busankoppler abnehmbar und lösbar auf dem Busankoppler verrastet oder einteilig mit dem Busankoppler ausgebildet ist, wobei in dem Fall, dass der Tastaufsatz von dem Busankoppler abnehmbar ausgebildet ist, eine Spannungsversorgung des Tastaufsatzes sowie eine Signalübertragung zwischen dem Tastaufsatz und dem Busankoppler ausschließlich über mindestens eine Schnittstelle zwischen dem Tastaufsatz und dem Busankoppler bereitgestellt ist. Die mindestens eine Schnittstelle ist vorzugsweise als ein- oder mehrpolige Stecker-Buchse-Verbindung ausgebildet.

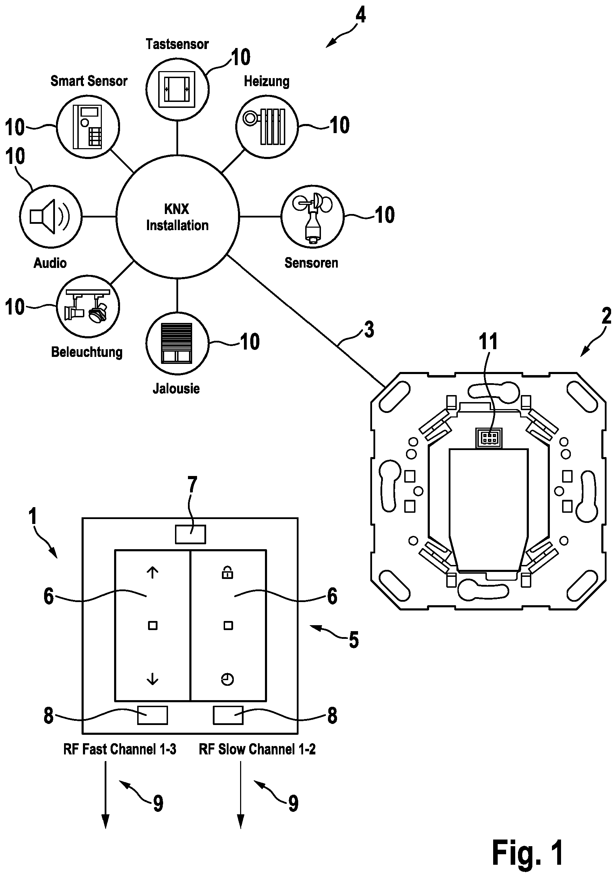

Weitere Einzelheiten der Erfindung werden anhand der nachstehenden Figur 1 erläutert. Diese zeigt eine beispielhafte Ausführungsform eines erfindungsgemäßen Tastaufsatzes, der in ein Gebäudeautomationssystem integriert ist.

Der Tastaufsatz 1 ist über einen Busankoppler 2 an eine Busleitung 3 eines Gebäudeautomationssystems 4 angebunden. Der Busankoppler 2 kann ein aus dem Stand der Technik bekanntes, standardisiertes UP-Einbaugerät sein, welches an die beispielsweise als TP-Leitung (Twisted-Pair-Leitung) ausgebildete Busleitung 3 angeklemmt ist. Das Gebäudeautomationssystem 4 ist vorliegend als ein System nach dem KNX-Standard ausgebildet, in welches eine Vielzahl Netzwerkteilnehmer 10, einschließlich Sensoren und Aktoren, integriert sind. Insoweit nicht der erfindungsgemäße Tastaufsatz 1 betroffen ist, kann das Gebäudeautomationssystem 4 insbesondere ein Gebäudeautomationssystem nach dem Stand der Technik sein. Die Erfindung lässt es zu, dass der Tastaufsatz 1 auch bei erfindungsgemäßer Ausbildung als ein Austauschgerät im Austausch gegen einen Tastaufsatz nach dem Stand der Technik ausgebildet werden kann. Für die Nachrüstung ist es daher lediglich erforderlich, den Tastaufsatz nach dem Stand der Technik von dem Busankoppler 2 abzunehmen und durch den erfindungsgemäßen Tastaufsatz 1 zu ersetzen, was in aus dem Stand der Technik bekannter Weise durch Abhebeln des alten und Aufrasten des erfindungsgemäßen Tastaufsatzes 1 auf den Busankoppler 2 realisierbar ist. Darüber hinaus sind keine Installationsarbeiten erforderlich.

Insbesondere kann vorgesehen sein, dass der Tastaufsatz über seine Ankopplung an die Busleitung 3 oder mit Hilfe seiner Funkschnittstelle 8 Parametrisierungsdaten für die Selbstinstallation bezieht. Es kann jedoch auch eine benutzergeführte Parametrisierung vorgesehen sein, wie dies ebenso aus dem Stand der Technik bekannt ist und daher vorliegend nicht weiter erläutert werden soll.

Der Tastaufsatz 1 ist in der Darstellung gemäß Figur 1 in der Draufsicht auf seine Vorderseite gezeigt, so dass seine Rückseite, an welcher die Signalschnittstelle 5 für die Ankopplung an die komplementäre Schnittstelle 11 des Busankopplers 2 angeordnet ist, nicht zu erkennen ist. Die komplementäre Signalschnittstelle 11 und die Signalschnittstelle 5 können insbesondere als mehrpolige Stecker-Buchse-Schnittstellen ausgebildet sein und im Übrigen die einzige elektrische Schnittstelle zwischen dem Tastaufsatz 1 und dem Busankoppler 2 darstellen. Insbesondere kann somit die Signalschnittstelle des in den Tastaufsatz 1 integrierten Medienkopplers 7 dieselbe Schnittstelle sein, über welche das durch Betätigen des Tasters 6 erzeugte Signal eines Telegrammtyps für die drahtgebundene Signalübertragung in den Busankoppler 2 übertragen wird. Dadurch wird die Nachrüstbarkeit des erfindungsgemäßen Tastaufsatzes durch Austausch eines Tastaufsatzes aus dem Stand der Technik durch diesen in der zuvor beschriebene Weise weiter erleichtert.

Demgemäß weist der Tastaufsatz 1 eine einzige Signalschnittstelle 5 (nicht dargestellt) zur Verbindung mit dem Busankoppler 2 sowie mindestens eine Taste 6, vorliegend zwei Schaltwippen, auf, die dazu eingerichtet sind, infolge ihrer Betätigung ein Signal eines Telegrammtyps für die drahtgebundene Signalübertragung zu erzeugen. Es kann nunmehr vorgesehen sein, dass das durch Betätigen der als Schaltwippen ausgebildeten Taster 6 erzeugte Signal des Telegrammtyps für die drahtgebundene Signalübertragung unmittelbar über die Signalschnittstelle 5 und die komplementäre Schnittstelle 11 des Busankopplers 2 an den Busankoppler 2 übertragen und über die Busleitung 3 in das Gebäudeautomationssystem 4 eingeleitet wird.

Darüber hinaus weist der Tastaufsatz 1 einen Medienkoppler 7 mit einer Funkschnittstelle 8 auf, wobei der Medienkoppler dazu eingerichtet ist, ein Signal eines Telegrammtyps für die drahtgebundene Signalübertragung, beispielsweise das von dem Taster 6 durch Betätigen mindestens einer seiner Schaltwippen erzeugte Signal, in ein Signal eines Telegrammtyps für die drahtlose Signalübertragung umzuwandeln. Demgemäß kann vorgesehen sein, dass das infolge der Betätigung des Tasters 6 erzeugte Signal für die drahtgebundene Signalübertragung nicht oder nicht ausschließlich über die komplementären Schnittstellen 5, 11 in die Busleitung 3 eingekoppelt wird, sondern stattdessen oder zusätzlich in ein Signal eines Telegrammtyps für die drahtlose Signalübertragung gewandelt über die Funkschnittstelle 8 ausgesendet wird.

Umgekehrt kann vorgesehen sein, dass der Tastaufsatz 1 über die Funkschnittstelle 8 ein Signal eines Telegrammtyps für die drahtlose Signalübertragung empfängt, woraufhin der Medienkoppler 7 das Signal entweder unverändert über die komplementären Schnittstellen 5, 11 an den Busankoppler 2 überträgt, so dass dieser das Signal für die drahtlose Signalübertragung in die Busleitung 3 einkoppelt, oder dass der Medienkoppler 7 das Signal des Telegrammtyps für die drahtlose Signalübertragung in ein Signal eines Telegrammtyps für die drahtgebundene Signalübertragung umwandelt und als umgewandeltes Signal über die komplementären Schnittstellen 5, 11 in den Busankoppler 2 einkoppelt, welcher das Signal über die Busleitung 3 in das Gebäudeautomationssytem 4 einkoppelt.

Je nach übertragenem Signal kann die Funkschnittstelle 8 für die Übertragung des Signals zwischen mindestens zwei sich in ihrem Frequenzbereich und/oder in ihrer Datenrate unterscheidende Funkkanäle auswählen. Insbesondere kann die Funkschnittstelle mindestens zwei sich insoweit unterscheidende Funkkanäle aufwiesen. Bei einer Ausführungsform weist die Funkschnittstelle 8 drei RF-Fast-Channel und zwei RF-Slow-Channel auf, wobei die Fast-Channel eine Datenrate aufweisen, die mindestens zweimal und vorzugsweise zehnmal so hoch wie die Datenrate der Slow-Channel ist. Auch die Fast-Channel und die Slow-Channel können sich untereinander unterscheiden, insbesondere hinsichtlich ihrer Übertragungsfrequenz. So kann der Tastaufsatz 1 für die Funkkommunikation beispielsweise fünf unterschiedliche Kanäle unterstützen, zwischen denen der Tastaufsatz 1 bedarfsweise wechseln kann. Die Fast-Channel finden ihre Anwendung beispielsweise beim Schalten/Dimmen von Licht unter Ansteuerung entsprechender Aktoren des Gebäudeautomationssystems 4, bei denen eine sehr schnelle Rückmeldung infolge einer Betätigung der Taster 6 vom Anwender erwartet wird. Hingegen können beispielsweise die Slow-Channel genutzt werden, um HVAC-Anwendungen (Heating, Ventilation and Air Conditioning - Heizung, Lüftung, Klimatechnik) umzusetzen, die eine weniger schnelle Rückmeldung erfordern. Die HVAC-Anwendungen können insbesondere als batteriebetriebene Geräte und damit autark ohne fest installierte Versorgungsleitungen realisiert werden. Dies können beispielsweise batteriebetriebene Stellventile oder Heizkörperthermostate für Radiatoren oder auch batteriebetriebene Rauchmelder oder dergleichen sein.

Nach den Prinzipien der Erfindung umgesetzte Tastaufsätze können somit insbesondere sowohl eine RF- als auch eine TP-Funktionalität aufweisen, insofern, als dass über eine einzige Bedienung des Tastaufsatzes durch Betätigen des Tasters 6 gleichzeitig Steuerbefehle an TP- und RF-Netzwerkteilnehmer 10 übermittelt werden können, welche ein Anwender individuell auswählen oder beispielsweise zu einer zusammenhängenden Gruppe gruppieren kann, so dass diese über eine einzige Betätigung des Tasters 6 gleichzeitig angesteuert werden können, obschon sie dabei von unterschiedlichen Telegrammtypen, sowohl drahtgebunden als auch drahtlosen Telegrammtypen, angesteuert werden.

Der Tastaufsatz kann auch dazu eingerichtet sein, eingehende Signale des Telegrammtyps für die drahtgebundene Signalübertragung über den Medienkoppler 7 transformiert als Signale eines Telegrammtyps für die drahtlose Signalübertragung über die Funkschnittstelle 8 an drahtlos angebundene Netzwerkteilnehmer 10 zu übertragen. Umgekehrt können auch von RF-Teilnehmern 10 des Systems 4 über die Funkschnittstelle 8 empfangene RF-Signale über den Medienkoppler 7 in TP-Signale übertragen und an TP-Teilnehmer 10 des Systems 4 übermittelt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Tastaufsatz
- 2: Busankoppler
- 3: Busleitung
- 4: Gebäudeautomationssystem
- 5: Signalschnittstelle
- 6: Taster
- 7: Medienkoppler
- 8: Funkschnittstelle
- 9: Funkkanal
- 10: Netzwerkteilnehmer
- 11: komplementäre Schnittstelle

## Patentansprüche

1. Tastaufsatz (1) für einen Busankoppler (2) an eine Busleitung (3) eines Gebäudeautomationssystems (4), wobei der Tastaufsatz (1) eine Signalschnittstelle (5) zur Verbindung mit einem Busankoppler (2) und mindestens einen Taster (6) aufweist, der dazu eingerichtet ist, infolge seiner Betätigung ein Signal für die drahtgebundene Signalübertragung zu erzeugen, wobei der Tastaufsatz (1) einen Medienkoppler (7) mit einer Funkschnittstelle (8) und mit einer weiteren Signalschnittstelle (5) zur Verbindung mit einem Busankoppler (2) aufweist, wobei der Medienkoppler (7) dazu eingerichtet ist, ein Signal für die drahtgebundene Signalübertragung in ein Signal für die drahtlose Signalübertragung umzuwandeln oder umgekehrt, **dadurch gekennzeichnet, dass** das Signal für die drahtgebundene Signalübertragung eines Telegrammtyps ist und das Signal für die drahtlose Signalübertragung eines Telegrammtyps ist, wobei die Funkschnittstelle (8) für die Übertragung des Signals des Telegrammtyps für die drahtlose Signalübertragung mindestens zwei sich in ihrem Frequenzbereich und/oder in ihrer Datenrate unterscheidende Funkkanäle (9) aufweist.

2. Tastaufsatz (1) nach Anspruch 1, bei dem der Medienkoppler (7) dazu eingerichtet ist, ein Signal eines Telegrammtyps für die drahtlose Signalübertragung über die Funkschnittstelle (8) zu empfangenen und in ein Signal eines Telegrammtyps für die drahtgebundene Signalübertragung umzuwandeln und an die Signalschnittstelle (5) zur Verbindung mit einem Busankoppler (2) weiterzuleiten.

3. Tastaufsatz (1) nach Anspruch 1 oder 2, bei dem die Signalschnittstelle (5) und die weitere Signalschnittstelle (5) zur Verbindung mit einem Busankoppler (2) dieselbe Signalschnittstelle (5) sind.

4. Tastaufsatz (1) nach einem der vorangegangenen Ansprüche, bei dem der erste Telegrammtyp ein KNX-TP-Telegramm und/oder der zweite Telegrammtyp ein KNX-RF-Telegramm ist.

5. Tastaufsatz (1) nach einem der vorangegangenen Ansprüche, bei dem der Medienkoppler (7) oder der Taster (6) dazu eingerichtet ist, das Signal des Telegrammtyps für die drahtlose Signalübertragung an die Signalschnittstelle (5) weiterzuleiten.

6. Tastaufsatz (1) nach einem der vorangegangenen Ansprüche, bei dem der Taster (6) dazu eingerichtet ist, das infolge seiner Betätigung erzeugte Signal eines Telegrammtyps für die drahtgebundene Signalübertragung an den Medienkoppler (7) weiterzuleiten.

7. Tastaufsatz (1) nach Anspruch 6, bei dem der Medienkoppler (7) dazu eingerichtet ist, das von dem Taster (6) empfangene und in das Signal eines Telegrammtyps für die drahtlose Signalübertragung umgewandelte Signal über die Funkschnittstelle (8) auszusenden.

8. Tastaufsatz (1) nach einem der vorangegangenen Ansprüche, bei dem der Medienkoppler (7) dazu eingerichtet ist, ein über die Funkschnittstelle (8) empfangenes Signal zu verstärken und als verstärktes Signal über die Funkschnittstelle (8) auszusenden.

9. Tastaufsatz (1) nach Anspruch 1, bei dem ein erster der Funkkanäle (9) (Fast Channel) eine Datenrate aufweist, die mindestens zweimal und vorzugsweise mindestens zehnmal so hoch wie die Datenrate eines zweiten der Funkkanäle (9) (Slow Channel) ist.

10. Tastaufsatz (1) nach Anspruch 1, bei dem die Funkschnittstelle (8) dazu eingerichtet ist, abhängig von einer erforderlichen Datenrate den ersten oder den zweiten Funkkanal (9) auszuwählen, wobei die erforderliche Datenrate in einem Telegramm des Signals des Telegrammtyps für die drahtlose Signalübertragung hinterlegt ist.

11. Verfahren für die Kommunikation in einem Netzwerk eines Gebäudeautomationssystems (4), das sowohl drahtgebundene als auch drahtlos eingebundene Netzwerkteilnehmer (10) sowie mindestens einen Tastaufsatz (1) nach einem der vorangegangenen Ansprüche aufweist, der über einen Busankoppler (2) an eine Busleitung (3) des Gebäudeautomationssystems (4) angebunden ist, wobei das Verfahren mindestens eine der beiden Schrittabfolgen a. und b. aufweist:
a. Empfangen eines Signals eines Telegrammtyps für die drahtlose Signalübertragung über die Funkschnittstelle (8) des Medienkopplers (7) und Umwandeln des Signals durch den Medienkoppler (7) in ein Signal eines Telegrammtyps für die drahtgebundene Signalübertragung, das über die Signalschnittstelle (5) an den Busankoppler (2) übertragen wird;
b. Betätigen des Tasters (6) des Tastaufsatzes (1) und Erzeugen eines Signals eines Telegrammtyps für die drahtlose Signalübertragung, das über die Funkschnittstelle (8) ausgesendet wird,
**dadurch gekennzeichnet, dass** in der Schrittabfolge a. das Empfangen eines Signals und/oder in der Schrittabfolge b. das Aussenden über die Funkschnittstelle (8) das Ermitteln einer erforderlichen Datenrate und das Auswählen eines in Bezug auf die erforderliche Datenrate passenden Funkkanals aus einer Mehrzahl Funkkanäle (9) der Funkschnittstelle (8), die sich zumindest hinsichtlich ihrer Datenrate unterscheiden, aufweist.

12. Verfahren nach Anspruch 11, bei dem in der Schrittfolge b. das Erzeugen des Signals eines Telegrammtyps für die drahtlose Signalübertragung das Umwandeln eines von dem Taster (6) empfangenen Signals eines Telegrammtyps für die drahtgebundene Signalübertragung in das Signal eines Telegrammtyps für die drahtlose Signalübertragung aufweist.

13. Verfahren nach Anspruch 11 oder 12, bei dem die Schrittfolge b. das Weiterleiten des Signals eines Telegrammtyps für die drahtgebundene Signalübertragung an den Medienkoppler (7) aufweist, der das Signal in das Signal eines Telegrammtyps für die drahtlose Signalübertragung umwandelt und über die Funkschnittstelle (8) aussendet.

14. Bediengerät für ein Gebäudeautomationssystem, das einen Tastaufsatz (1) nach einem der Ansprüche 1 bis 10 sowie einen Busankoppler (2) aufweist, wobei der Tastaufsatz (1) von dem Busankoppler (2) abnehmbar und lösbar auf dem Busankoppler verrastet oder einteilig mit dem Busankoppler ausgebildet ist, und wobei in dem Fall, dass der Tastaufsatz (1) von dem Busankoppler (2) abnehmbar ausgebildet ist, eine Spannungsversorgung des Tastaufsatzes (1) sowie eine Signalübertragung zwischen dem Tastaufsatz (1) und dem Busankoppler (2) ausschließlich über mindestens eine Schnittstelle zwischen dem Tastaufsatz (1) und dem Busankoppler (2) bereitgestellt ist.

## Claims

1. A push-button attachment (1) for a bus coupler (2) to a bus line (3) of a building automation system (4), wherein the push-button attachment (1) has a signal interface (5) for connection to a bus coupler (2) and at least one push-button (6), which is set up to generate a signal for the wire-bound signal transmission as a result of its actuation, the push-button attachment (1) having a media coupler (7) with a radio interface (8) and with a further signal interface (5) for connection to a bus coupler (2), the media coupler (7) being set up to convert a signal for the wired signal transmission into a signal for the wireless signal transmission or vice versa, **characterized in that** the signal for the wired signal transmission is of a telegram type and the signal for the wireless signal transmission is of a telegram type, the radio interface (8) for the transmission of the signal of the telegram type for the wireless signal transmission having at least two radio channels (9) differing in their frequency range and/or in their data rate.

2. The push-button attachment (1) according to claim 1, in which the media coupler (7) is set up to receive a signal of a telegram type for the wireless signal transmission via the radio interface (8) and to convert it into a signal of a telegram type for the wired signal transmission and to forward it to the signal interface (5) for connection to a bus coupler (2).

3. The push-button attachment (1) according to claim 1 or 2, in which the signal interface (5) and the further signal interface (5) for connection to a bus coupling unit (2) are the same signal interface (5).

4. The push-button attachment (1) according to one of the preceding claims, in which the first telegram type is a KNX-TP telegram and/or the second telegram type is a KNX-RF telegram.

5. The push-button attachment (1) according to one of the preceding claims, in which the media coupler (7) or the push-button (6) is set up to forward the signal of the telegram type for wireless signal transmission to the signal interface (5).

6. The push-button attachment (1) according to one of the preceding claims, in which the push-button (6) is arranged to forward the signal, generated as a result of its actuation, of a telegram type for wired signal transmission to the media coupler (7).

7. The push-button attachment (1) according to claim 6, in which the media coupler (7) is arranged to transmit the signal received from the push-button (6) and converted into the signal of a telegram type for wireless signal transmission via the radio interface (8).

8. The push-button attachment (1) according to any of the preceding claims,
wherein the media coupler (7) is arranged to amplify a signal received via the radio interface (8) and to transmit it as an amplified signal via the radio interface (8).

9. The push-button attachment (1) according to claim 1, wherein a first of the radio channels (9) (fast channel) has a data rate that is at least twice and preferably at least ten times as high as the data rate of a second of the radio channels (9) (slow channel).

10. The push-button attachment (1) according to claim 1, in which the radio interface (8) is set up to select the first or the second radio channel (9) depending on a required data rate, the required data rate being stored in a telegram of the signal of the telegram type for wireless signal transmission.

11. A method for communication in a network of a building automation system (4) which has both wired and wirelessly integrated network subscribers (10) and at least one push-button attachment (1) according to one of the preceding claims, which is connected to a bus line (3) of the building automation system (4) via a bus coupler (2), the method having at least one of the two step sequences a. and b:
a. Receiving a signal of a telegram type for wireless signal transmission via the radio interface (8) of the media coupler (7) and converting the signal by the media coupler (7) into a signal of a telegram type for wired signal transmission, which is transmitted to the bus coupler (2) via the signal interface (5);
b. Actuating the push-button (6) of the push-button attachment (1) and generating a signal of a telegram type for wireless signal transmission, which is transmitted via the radio interface (8),
**characterised in that** in the step sequence a. receiving a signal and/or in the step sequence b. transmitting via the radio interface (8) comprises determining a required data rate and selecting a radio channel suitable in relation to the required data rate from a plurality of radio channels (9) of the radio interface (8) which differ at least in terms of their data rate.

12. The method according to claim 11, wherein in the step sequence b. generating the signal of a telegram type for wireless signal transmission comprises converting a signal of a telegram type for wired signal transmission received from the button (6) into the signal of a telegram type for wireless signal transmission.

13. The method according to claim 11 or 12, wherein the step sequence comprises b. forwarding the signal of a telegram type for the wired signal transmission to the media coupler (7), which converts the signal into the signal of a telegram type for the wireless signal transmission and transmits it via the radio interface (8).

14. An operating device for a building automation system, comprising a push-button attachment (1) according to any one of claims 1 to 10 and a bus coupler (2), wherein the push-button attachment (1) is detachable from the bus coupler (2) and is detachably latched onto the bus coupler or is formed integrally with the bus coupler, and wherein in the case, that the push-button attachment (1) is designed to be detachable from the bus coupler (2), a voltage supply of the push-button attachment (1) as well as a signal transmission between the push-button attachment (1) and the bus coupler (2) is provided exclusively via at least one interface between the push-button attachment (1) and the bus coupler (2).

## Revendications

1. Garniture d'interrupteur (1) pour un coupleur de bus (2) à une ligne de bus (3) d'un système de domotique (4), dans laquelle la garniture d'interrupteur (1) comprend une interface de signaux (5) pour la liaison avec un coupleur de bus (2) et au moins un bouton (6) qui est conçu pour générer, à la suite de son actionnement, un signal pour la transmission de signaux filaires, dans laquelle la garniture d'interrupteur (1) comprend un coupleur de médias (7) avec une interface radio (8) et avec une autre interface de signaux (5) pour la liaison avec un coupleur de bus (2), dans laquelle le coupleur de médias (7) est conçu pour convertir un signal pour la transmission de signaux filaires en un signal pour la transmission de signaux sans fil ou inversement, **caractérisé en ce que** le signal pour la transmission de signaux filaires est de type télégramme et le signal pour la transmission de signaux sans fil est de type télégramme, dans lequel l'interface radio (8) comprend, pour la transmission du signal de type télégramme pour la transmission de signaux sans fil, au moins deux canaux radio (9) se distinguant par leurs plages de fréquence et/ou par leurs débits de données.

2. Garniture d'interrupteur (1) selon la revendication 1, dans laquelle le coupleur de médias (7) est conçu pour recevoir un signal de type télégramme pour la transmission de signaux sans fil par l'intermédiaire de l'interface radio (8) et le convertir en un signal du type télégramme pour la transmission de signaux filaires et le transmettre à l'interface de signaux (5) pour la liaison avec un coupleur de bus (2).

3. Garniture d'interrupteur (1) selon la revendication 1 ou 2, dans laquelle l'interface de signaux (5) et l'autre interface de signaux (5) pour la liaison avec un coupleur de bus (2) sont la même interface de signaux (5).

4. Garniture d'interrupteur (1) selon l'une des revendications précédentes, dans laquelle le premier type de télégramme est un télégramme KNX-TP et/ou le deuxième type de télégramme est un télégramme KNX-RF.

5. Garniture d'interrupteur (1) selon l'une des revendications précédentes, dans laquelle le coupleur de médias (7) ou le bouton (6) est conçu pour transmettre le signal de type télégramme pour la transmission de signaux sans fil à l'interface de signaux (5).

6. Garniture d'interrupteur (1) selon l'une des revendications précédentes, dans laquelle le bouton (6) est conçu pour transmettre le signal de type télégramme pour la transmission de signaux filaires, généré à la suite de son actionnement, au coupleur de médias (7).

7. Garniture d'interrupteur (1) selon la revendication 6, dans laquelle le coupleur de médias (7) est conçu pour émettre le signal reçu par le bouton (6) et converti en signal du type télégramme pour la transmission de signaux sans fil par l'intermédiaire de l'interface radio (8).

8. Garniture d'interrupteur (1) selon l'une des revendications précédentes, dans laquelle le coupleur de médias (7) est conçu pour amplifier un signal reçu par l'intermédiaire de l'interface radio (8) et de l'émettre sous la forme d'un signal amplifié par l'intermédiaire de l'interface radio (8).

9. Garniture d'interrupteur (1) selon la revendication 1, dans laquelle un premier des canaux radio (9) (Fast Channel) présente un débit de données qui est au moins deux fois et de préférence au moins dix fois plus grand que le débit de données d'un deuxième des canaux radio (9) (Slow Channel).

10. Garniture d'interrupteur (1) selon la revendication 1, dans laquelle l'interface radio (8) est conçue pour sélectionner le premier ou le deuxième canal radio (9) en fonction d'un débit de données nécessaire, dans laquelle le débit de données nécessaire est enregistré dans un télégramme du signal de type télégramme pour la transmission de signaux sans fil.

11. Procédé pour la communication dans un réseau d'un système de domotique (4), qui comprend des composants de réseau filaires que des composants de réseau sans fil (10) ainsi qu'au moins une garniture d'interrupteur (1) selon l'une des revendications précédentes, qui est intégré par l'intermédiaire d'un coupleur de bus (2) à une ligne de bus (3) du système de domotique (4), dans lequel le procédé comprend au moins une des deux séquences d'étapes a. et b. :
a. réception d'un signal de type télégramme pour la transmission de signaux sans fil par l'intermédiaire de l'interface radio (8) du coupleur de médias (7) et conversion du signal par le coupleur de médias (7) en un signal de type télégramme pour la transmission de signaux filaires, qui est transmis par l'intermédiaire de l'interface de signaux (5) au coupleur de bus (2) ;
b. actionnement du bouton (6) de la garniture d'interrupteur (1) et production d'un signal de type télégramme pour la transmission de signaux sans fil, qui est émis par l'intermédiaire de l'interface radio (8),
**caractérisé en ce que**, dans la séquence d'étapes a., la réception d'un signal et/ou dans la séquence d'étapes b., l'émission par l'intermédiaire de l'interface radio (8), la détermination d'un débit de données nécessaire et comprend la sélection d'un canal radio adapté au débit de données nécessaire parmi une pluralité de canaux radio (9) de l'interface radio (8), qui se distinguent au moins en ce qui concerne leur débit de données.

12. Procédé selon la revendication 11, dans lequel, dans la séquence d'étapes b., la production du signal de type télégramme pour la transmission de signaux sans fil comprend la conversion d'un signal de type télégramme pour la transmission de signaux filaires, reçu par le bouton (6), en signal de type télégramme pour la transmission de signaux sans fil.

13. Procédé selon la revendication 11 ou 12, dans lequel la séquence d'étapes b. comprend la transmission du signal de type télégramme pour la transmission de signaux filaires au coupleur de médias (7), qui convertit le signal en signal de type télégramme pour la transmission de signaux sans fil et l'émet par l'intermédiaire de l'interface radio (8).

14. Appareil de commande pour un système de domotique, qui comprend une garniture d'interrupteur (1) selon l'une des revendications 1 à 10 ainsi qu'un coupleur de bus (2), dans lequel la garniture d'interrupteur (1) peut être retirée du coupleur de bus (2) et est encliqueté de manière amovible sur le coupleur de bus ou est réalisé d'une seule pièce avec le coupleur de bus et dans lequel, dans le cas où la garniture d'interrupteur (1) est conçue de manière amovible du coupleur de bus (2), une alimentation en tension de la garniture d'interrupteur (1) ainsi qu'une transmission de signaux entre la garniture d'interrupteur (1) et le coupleur de bus (2) est mise à disposition exclusivement par l'intermédiaire d'au moins une interface entre la garniture d'interrupteur (1) et le coupleur de bus (2).
